# EUROPÄISCHE PATENTSCHRIFT

(11) **EP 2 961 009 B1**
(45) Veröffentlichungstag und Bekanntmachung des Hinweises auf die Patenterteilung: **27.09.2017**
(21) Anmeldenummer: 14173912.8
(22) Anmeldetag: 25.06.2014
(51) Int. Cl.: H01R 39/08, H02K 9/28, H02K 13/00, H02K 7/18

(54) **Windkraftgenerator mit einer Schleifringanordnung**
Wind power generator with a slip ring assembly
Générateur d'éolienne avec un système de bague collectrice

(43) Veröffentlichungstag der Anmeldung: 30.12.2015
(73) Patentinhaber: Siemens Aktiengesellschaft, 80333 München (DE)
(72) Erfinder: Binder, Herbert, 94127 Neuburg (DE)

(56) Entgegenhaltungen:
- WO-A1-2010/048957
- WO-A2-2005/103489
- CN-U- 201 576 997
- CN-U- 202 535 217
- GB-A- 191 012 889
- JP-A- H03 289 345
- JP-A- 2013 192 427
- SU-A1- 641 594
- US-A- 5 650 674

## Beschreibung

Die Erfindung betrifft einen Windkraftgenerator mit einer Schleifringanordnung gemäß Anspruch 1. Durch Kosten- und Bauraumoptimierung der Windkraftanlagen werden Generatoren und ihre Komponenten immer kompakter. Dies führt dazu, dass bei gleichbleibender Baugröße die Schleifringkomponenten mit immer höheren Strombelastungen belastet werden. In diesem Fall steigen die Temperaturen insbesondere des Schleifrings, der Schleifringbürsten und der Bürstenhalter erheblich an. Zudem haben kompakt gebaute Schleifringeinheiten ein geringeres Luftvolumen und eine schlechtere freie Konvektion im Schleifringinnenraum, da sie eine Art Schleifringkapsel darstellen. Des Weiteren wird die Schleifringoberfläche bei größeren Leistungen aus Kostengründen nicht vergrößert, was dazu führt, dass sich der Schleifringkörper stärker erwärmt. Alle diese Faktoren führen dazu, dass die Temperatur der einzelnen Komponenten einer Schleifringeinheit auf bzw. über einen kritischen Wert ansteigt und Schäden am Schleifring und an den Schleifringbürsten entstehen können.
Bisher werden ab einer bestimmten Baugröße Schleifringkörper mit größerem Außendurchmesser eingesetzt. Entsprechend größer wird hiermit auch die verwendete Bürstenhalteeinheit, die sogenannte Bürstenbrücke. Dadurch entstehen nicht so hohe Temperaturen, da die Arbeitsfläche des Schleifringkörpers wesentlich größer ist. Die Schleifringkapsel wird entsprechend größer gebaut um Luftstrecken einzuhalten. Des Weiteren wird bzw. muss der Lüfter der Schleifringeinheit größer gewählt werden. All diese Maßnahmen führen zu wesentlich höheren Materialkosten und zu einen größerem Außenabmaß des fertigen Generators. Aus der WO 2010/048957 A1 ist ein Windkraftgenerator mit einer Schleifringanordnung bekannt, bei der die Schleifringoberfläche gekühlt wird.

Der Erfindung liegt die Aufgabe zugrunde, die Kühlung von Schleifringanordnungen zu verbessern.
Diese Aufgabe wird durch eine Schleifringanordnung der eingangs genannten Art dadurch gelöst, dass der zumindest eine Rotationskörper aus der Mantelfläche herausragende Vorsprünge zur Erzeugung eines Kühlluftstroms aufweist.
Dank der Vorsprünge können insbesondere durch Ausnutzung der Umgebungsluft die direkt beanspruchten Komponenten der Schleifringanordnung, wie zum Beispiel die zumindest zwei Schleifringe, gekühlt werden. Insbesondere wird durch die Vorsprünge ein Volumenstrom erzeugt. Dadurch lässt sich die Temperatur der Schleifringanordnung, besonders der Schleifringe, während des Betriebs deutlich reduzieren. Durch die niedrigere Temperatur werden kleinere Baugrößen der Schleifringe ermöglicht. Ebenfalls erlaubt die verbesserte Kühlung, den jeweiligen Schleifring mit einer höheren Leistung zu betreiben, so dass höhere Leistungsstufen als bisher möglich sind. Weiterhin kann durch diese Kühlung auf eine Fremdbelüftung zur Erzeugung eines Kühlluftvolumenstroms verzichtet werden.
Von Vorteil ist weiterhin, dass alle bisher bekannten Schleifringlösungen auf dieses System übertragen werden können, da die Herstellung der vorgeschlagenen Schleifringanordnung einfach und kostenneutral gegenüber dem bisherigen System ist. Man hat keinerlei negative Auswirkungen bei Maschinen, die weniger belastet sind und diese zusätzliche Kühlung nicht benötigen würden. Dadurch werden keine zusätzlichen neue Schleifringe benötigt, sondern man kann vorhandene Systeme, ohne Nachteile zu erhalten, direkt ersetzen und hat keine zusätzlichen Komponenten zu verwalten. Dies bietet Vorteile in Bezug auf die Lagerhaltung, den Einkauf usw..

Dabei ist insbesondere vorgesehen, kühle Umgebungsluft mit möglichst einfachen Mitteln an die entsprechend überhitzungsgefährdeten Bereiche im Schleifringsystem zu bringen, insbesondere an die Schleifringkörper. Dies wird mit den Vorsprüngen erreicht. Beispielsweise wird die Kühlluft durch die Vorsprünge des sich drehenden Rotationskörpers aus einem insbesondere ohnehin vorhandenen Kühlluftstrom entnommen und direkt an die gefährdeten Bereiche gefördert und verwirbelt. Dies kann mit einem entsprechend ausgeformten Luftleitsystem unterstützt werden, welches beispielsweise Luftleitelemente aufweist, die einerseits geringe Reibungsverluste verursachen und andererseits die Kühlluft den zu kühlenden Elementen zu- und wieder abführt.

Ohne die vorgeschlagene Schleifringanordnung ist eine derart gezielte Kühlung der kritischen Komponenten nur schwierig realisierbar, da es ohne diese Anordnung schwierig ist, direkt an den kritischen Stellen zu kühlen. Insbesondere werden bei der vorgeschlagenen Schleifringanordnung die Laufflächen der Schleifringe zuverlässig gekühlt. Die Schleifringlaufflächentemperaturen bleiben durch diese Maßnahmen in einem betriebsgerechtem Temperaturbereich, so dass die vorgeschlagene Schleifringanordnung während des Betriebs gegen eine Überhitzung geschützt ist. Somit können also wesentlich kleinere, günstigere Bauteile verwendet und dabei ein problemloser Betrieb gewährleistet werden. Zudem ist bei dieser Art von Kühlung einer Belüftungserzeugung des Volumenstroms nicht notwendig der erforderliche Volumenstrom wird insbesondere mit erläuterten Vorsprüngen erzeugt.

Die vorgeschlagene Schleifringanordnung kann insbesondere drei und mehr Schleifringe aufweisen, welche in axialer Richtung voneinander beabstandet sind. Insbesondere ragen die Vorsprünge in radialer Richtung, vorzugsweise nach radial außen, aus der Mantelfläche heraus. Vorzugsweise sind zwei benachbarte, insbesondere sämtliche, Schleifringe elektrisch voneinander isoliert. So können beispielsweise drei Schleifringe für drei elektrische Phasen vorgesehen sein, welche elektrisch voneinander isoliert sind.

Bei einer vorteilhaften Ausgestaltung der Erfindung sind die Vorsprünge jeweils in einem jeweiligen Zwischenraum zwischen zwei benachbarten Schleifringen angeordnet.

Der Raum zwischen zwei Schleifringen ist üblicherweise vergleichsweise schwierig zu kühlen. Die Anordnung der Vorsprünge zwischen zwei Schleifringen erlaubt somit eine zuverlässige Kühlung in einem jener Bereiche, welcher während des Betriebs ansonsten besonders heiß wäre. Denn durch die Vorsprünge wird während einer Drehung des Rotationskörpers Kühlluft auch in den jeweiligen Zwischenraum gezogen, verwirbelt und wieder aus dem jeweiligen Zwischenraum heraus gedrückt, wodurch die Kühlluft die an den jeweiligen Zwischenraum angrenzenden Schleifringe kühlt.

Vorzugsweise erstrecken sich die Vorsprünge in axialer Richtung maximal entlang drei Vierteln, insbesondere zwei Dritteln, der axialen Erstreckung des jeweiligen Zwischenraums, wobei in axialer Richtung betrachtet beidseits des jeweiligen Vorsprungs eine Lücke zum jeweiligen Schleifring verbleibt. Eine derartige Ausgestaltung der Schleifringanordnung erlaubt eine besonders effiziente Verwirbelung der Kühlluft bzw. Kühlung der Schleifringe.

Bei einer weiteren vorteilhaften Ausgestaltung der Erfindung sind die Vorsprünge jeweils in axialer Richtung beiderseits eines jeweiligen Schleifringes angeordnet.

Durch die beiderseitige Anordnung von Vorsprüngen bezüglich eines jeweiligen Schleifringes wird eine besonders gleichmäßige Kühlung des jeweiligen Schleifringes gewährleistet. Dies gilt insbesondere für jene Schleifringe, welche in axialer Richtung am Rand der vorgeschlagenen Schleifringanordnung angeordnet sind.
Vorzugsweise verbleibt dabei in axialer Richtung zwischen dem jeweiligen Vorsprung und dem jeweiligen Schleifring eine Lücke, welche eine besonders wirkungsvolle Verwirbelung der Kühlluft bzw. Kühlung des jeweiligen Schleifrings erlaubt.

Erfindungsgemäß weist der jeweilige Schleifring einen aus der Mantelfläche herausragenden Schleifringkörper auf, wobei die radiale Erstreckung des jeweiligen Schleifringkörpers ausgehend von der Manteloberfläche mindestens so groß ist wie jene der Vorsprünge.
Der jeweilige Schleifringkörper kann insbesondere I- oder T-förmig ausgebildet sein und derart aus der Mantelfläche herausragen. Durch die die radiale Erstreckung der Vorsprünge, welche höchstens so groß ist wie jene des jeweiligen Schleifringkörpers, wird zum einen eine vergleichsweise kompakte Bauform der vorgeschlagenen Schleifringanordnung und zum anderen eine wirkungsvolle Kühlung des jeweiligen Schleifringkörpers sichergestellt.
Bei einer weiteren vorteilhaften Ausgestaltung der Erfindung ist der jeweilige Vorsprung im Wesentlichen rippenförmig ausgestaltet.
Die rippenförmige Ausgestaltung der Vorsprünge ist vergleichsweise einfach zu realisieren und gewährleistet gleichzeitig eine ausreichende Kühlung der Schleifringe. So wird kühle Luft mit den entsprechenden Rippen durch den sich drehenden Rotationskörper insbesondere aus einem ohnehin vorhandenen Kühlluftstrom entnommen und direkt an die gefährdeten Bereiche gefördert und verwirbelt.

Vorzugsweise sind die Rippen dabei im Wesentlichen quaderförmig ausgestaltet, wobei sich die Rippen insbesondere in einer Ebene erstrecken, welche von einer radialen Richtung und einer axialen Richtung aufgespannt wird.

Bei einer weiteren vorteilhaften Ausgestaltung der Erfindung ist der jeweilige Vorsprung im Wesentlichen fischgrätenförmig ausgestaltet.

Betrachtet man den Rotationskörper mit den Vorsprüngen von radial außen, so ist der jeweilige, fischgrätenförmige Vorsprung im Wesentlichen V-förmig ausgestaltet. Insbesondere bei einer Schleifringanordnung mit einer gegebenen Vorzugsdrehrichtung sind die Vorsprünge vorteilhafterweise derart ausgestaltet, dass die Spitze des jeweiligen V-förmigen Vorsprungs in Richtung der Drehrichtung weist. Diese Ausgestaltung bewirkt, dass Kühlluft während der Drehung des Rotationskörpers vom Bereich der Mitte zwischen zwei Schleifringen zum jeweiligen Schleifring hin beschleunigt wird. Somit ist eine besonders effiziente Kühlung des jeweiligen Schleifrings erzielbar.

Bei einer weiteren vorteilhaften Ausgestaltung der Erfindung weist die Schleifringanordnung zumindest einen Bürstenhalter auf, wobei die Schleifringanordnung zumindest eine Schleifringbürste je Schleifring aufweist, wobei die jeweilige Schleifringbürste mit dem jeweiligen Bürstenhalter verbunden ist und derart ausgestaltet ist, dass elektrische Energie vom bzw. zum jeweiligen Schleifring übertragbar ist.

Vorzugsweise ist der oben erläuterte Rotationskörper dabei drehbar gegenüber dem zumindest einen stillstehenden Bürstenhalter und den ebenfalls stillstehenden Schleifringbürsten gelagert. Die Vorsprünge ermöglichen dabei nicht nur die erläuterte Kühlung der Schleifringe, sondern gewährleisten gleichermaßen eine zuverlässige Kühlung des zumindest einen Bürstenhalters und der Schleifringbürsten, welche während des Betriebs der Schleifringanordnung ebenfalls einer erhöhten Temperatur ausgesetzt sein können. Dies wird dadurch erreicht, dass die Kühlluft durch die Vorsprünge derart verwirbelt wird, dass sie nicht nur an die Schleifringe gedrückt wird, sondern auch zu dem zumindest einen Bürstenhalter sowie zu den Schleifringbürsten gepresst wird.

Bei einer weiteren vorteilhaften Ausgestaltung der Erfindung weist die Schleifringanordnung dabei je Schleifring zumindest zwei oder drei Schleifringbürsten zur Übertragung elektrischer Energie vom bzw. zum jeweiligen Schleifring auf.

Beispielsweise können die zumindest zwei oder drei Schleifringbürsten in Umfangsrichtung nebeneinander, d.h. in axialer Richtung zueinander versetzt, angeordnet sein und dabei in Kontakt mit demselben Schleifring sein. Alternativ oder zusätzlich können die zumindest zwei oder drei Schleifringbürsten in axialer Richtung in derselben Ebene und in Umfangsrichtung zueinander versetzt angeordnet sein und dabei in Kontakt mit demselben Schleifring sein.

Diese Anordnung von mehreren Schleifringbürsten, welche in Kontakt mit ein und demselben Schleifring sind, bietet den Vorteil, dass besonders große elektrische Leistungen vom bzw. zum jeweiligen Schleifring übertragbar sind. Eine derartige Anordnung war bisher nur schwer realisierbar, da der Schleifring und insbesondere die Schleifringbürsten derart stark erhitzt würden, dass die Schleifringanordnung schließlich beschädigt würde. Erst die vorgeschlagene verbesserte Kühlung der Schleifringanordnung ermöglicht dank der zuvor erläuterten Vorsprünge eine Kühlung, die stark genug ist, dass auch noch deutlich mehr Schleifringbürsten in Kontakt mit lediglich einem Schleifring sind.

Insbesondere wenn die Schleifringanordnung drei Schleifringe aufweist und jeder der Schleifringe für eine von drei elektrischen Phasen vorgesehen ist, kann der jeweilige Schleifring mit noch mehr Schleifringbürsten pro Phase belastet werden, was ohne Kühlung nicht möglich wäre. Somit sind höhere Leistungsstufen als bisher möglich.

Bei einer weiteren vorteilhaften Ausgestaltung der Erfindung ist dabei im axialen Bereich zwischen zwei benachbarten Schleifringen jeweils ein Leitelement derart angeordnet, dass in Umfangsrichtung zumindest abschnittsweise ein vom jeweiligen Schleifring nach radial außen offener Kanal gebildet wird.

Beispielsweise kann der jeweilige Bürstenhalter als das jeweilige Leitelement fungieren und entsprechend ausgestaltet sein. Insbesondere für diesen Fall entstehen Bereiche, welche ohne die erläuterten Vorsprünge nur schwierig kontrolliert belüftet werden können. Durch das Zusammenspiel der Vorsprünge mit dem jeweiligen Leitelement wird jedoch eine Kühlluftströmung erzeugt bzw. begünstigt, welche radial innen vom jeweiligen Vorsprung über den jeweiligen Schleifringkörper, die jeweilige Schleifringbürste und den jeweiligen Bürstenhalter nach radial außen strömt. Dabei weist die Strömung vorzugsweise auch Komponenten in Umfangsrichtung auf, so dass die Kühlluft sowohl von radial innen nach radial außen als auch in Umfangsrichtung strömt.

Vorteilhafterweise erstreckt sich das jeweilige Leitelement nach radial innen höchstens bis zur radialen Außenseite des jeweiligen Schleifringkörpers, insbesondere höchstens bis zur Hälfte der radialen Erstreckung der jeweiligen Schleifringbürste. Dadurch wird einerseits eine ausreichende Verwirbelung der Kühlluft im Bereich des jeweiligen Schleifringkörper und der jeweiligen Schleifringbürsten und andererseits eine geordnete Abfuhr der erwärmten Kühlluft nach radial außen sichergestellt.

Gegebenenfalls kann der jeweilige, gebildete Kanal in Umfangsrichtung durch weitere Leitelemente untergliedert werden. Erfindungsgemäß weist die Schleifringanordnung dabei ein Gehäuse auf, welches den zumindest einen Rotationskörper, den zumindest einen Bürstenhalter und die Schleifringbürsten zumindest teilweise einhaust, wobei das Gehäuse zumindest eine erste Öffnung zum Eintritt von Kühlluft und zumindest eine zweite Öffnung zum Austritt von Kühlluft aufweist.
Das Gehäuse dient unter anderem dazu, die elektrischen Kontakte der Schleifringanordnung nach außen zu isolieren und auch dazu, die im Gehäuse herrschende Kühlluftströmung zu leiten. Hierzu sind zumindest eine erste bzw. zweite Öffnung zum Eintritt von Kühlluft in das Gehäuse bzw. zum Austritt von Kühlluft aus dem Gehäuse vorgesehen.
Beispielsweise kann die zumindest eine erste Öffnung an einer Stirnseite des Gehäuses angeordnet sein. Insbesondere wenn die zumindest eine zweite Öffnung an einer radialen Außenseite des Gehäuses angeordnet ist, kann somit eine Kühlluftströmung erzeugt werden, welche jener eines Radiallüfters ähnlich ist.
Bei einer weiteren vorteilhaften Ausgestaltung der Erfindung erstreckt sich der jeweilige Bürstenhalter dabei in Umfangsrichtung zwischen einem Anfangspunkt und einem Endpunkt entlang höchstens drei Vierteln, insbesondere der Hälfte, des vollen Umfangs um die Rotationsachse, wobei die zumindest eine erste Öffnung derart angeordnet ist, dass Kühlluft im Bereich des jeweiligen Anfangspunktes in das Gehäuse eindringen kann.
Der jeweilige Bürstenhalter deckt in Umfangsrichtung nicht den vollen Umfangs um die Rotationsachse ab, sondern erstreckt sich lediglich entlang höchstens drei Vierteln des vollen Umfangs, vorzugsweise jedoch mindestens entlang eines Viertels des vollen Umfangs. Vorzugsweise erstreckt sich der jeweilige Bürstenhalter entlang etwa der Hälfte des vollen Umfangs, wobei darunter auch noch eine Erstreckung im Bereich zwischen 40-60 % des vollen Umfangs verstanden wird. Entsprechend weist der jeweilige Bürstenhalter in Umfangsrichtung betrachtet einen jeweiligen Anfangspunkt und einen jeweiligen Endpunkt auf, wobei sich die jeweiligen Bürstenhalter vorzugsweise entlang desselben Umfangsbereiches erstrecken. Im Bereich des jeweiligen Bürstenhalters sind außerdem die jeweiligen Schleifringbürsten angeordnet, so dass während des Betriebs der Schleifringanordnung im Bereich des jeweiligen Bürstenhalters die meiste Verlustwärme erzeugt wird.

Die zumindest eine erste Öffnung ist im Bereich des jeweiligen Anfangspunktes angeordnet, so dass Kühlluft durch die zumindest eine erste Öffnung in das Gehäuse eindringen kann. Beispielsweise ist die zumindest eine erste Öffnung an einer Mantelfläche des Gehäuses angeordnet, so dass die Kühlluft vorzugsweise in radialer Richtung in das Gehäuse eindringen kann. Anschließend kann die Kühlluft im Bereich des jeweiligen Anfangspunktes zum Rotationskörper und insbesondere zu den dort angeordneten Vorsprüngen vordringen. Dort wird die Kühlluft durch eine Rotation des Rotationskörpers von den Vorsprüngen erfasst und insbesondere nach radial außen und in Umfangsrichtung gedrückt.

Insbesondere wenn die oben erläuterten, nach radial außen offenen Kanäle vorgesehen sind, kann die zumindest eine erste Öffnung eine Erstreckung in axialer Richtung aufweisen, welche zumindest so groß ist wie jene desjenigen Bereichs der Schleifringanordnung, in welchem die Schleifringe vorgesehen sind. Beispielsweise kann dabei pro nach radial außen offenem Kanal eine jeweilige erste Öffnung vorgesehen sein, wobei die zumindest eine erste Öffnung vorzugsweise an einer Mantelfläche des Gehäuses angeordnet ist, so dass die Kühlluft in radialer Richtung in das Gehäuse eindringen kann.

Beispielsweise können zusätzliche Leitelemente vorgesehen sein, mittels welchen die Kühlluft von der zumindest einen Öffnung verlustarm zu den Vorsprüngen im Bereich des jeweiligen Anfangspunktes führbar ist.

Insbesondere kann die zumindest eine zweite Öffnung derart angeordnet sein, dass die Kühlluft im Bereich des jeweiligen Endpunktes aus dem Gehäuse hinaus strömen kann. Insbesondere ist die zumindest eine zweite Öffnung an einer Mantelfläche des Gehäuses angeordnet, so dass die Kühlluft das Gehäuse in radialer Richtung verlassen kann. Sind die oben erläuterten, nach radial außen offenen Kanäle vorgesehen, kann die zumindest eine zweite Öffnung eine Erstreckung in axialer Richtung aufweisen, welche zumindest so groß ist wie jene desjenigen Bereichs der Schleifringanordnung, in welchem die Schleifringe vorgesehen sind. Beispielsweise kann dabei pro nach radial außen offenem Kanal eine jeweilige zweite Öffnung vorgesehen sein.

Bei einer weiteren vorteilhaften Ausgestaltung der Erfindung weist die Schleifringanordnung dabei einen Lüfter auf, welcher im Gehäuse angeordnet ist.

Der Lüfter erhöht die erzielbare Kühlleistung der Schleifringanordnung und ermöglicht so insbesondere eine zusätzlich erhöhte, übertragbare Leistung. Insbesondere kann der Lüfter als Radiallüfter ausgebildet sein, welcher drehfest mit dem Rotationskörper verbunden ist. Ein derartiger Radiallüfter wird beispielsweise dadurch gebildet, dass an dem Rotationskörper entsprechend ausgeformte Lüfterblätter befestigt sind.

Bei einer weiteren vorteilhaften Ausgestaltung der Erfindung ist dabei eine Einlassseite des Lüfters im Bereich des jeweiligen Endpunktes angeordnet, wobei eine Auslassseite des Lüfters derart angeordnet ist, dass vom Lüfter ausgelassene Kühlluft durch die zumindest eine zweite Öffnung aus dem Gehäuse strömen kann.

Die von der Verlustwärme der Schleifringanordnung erwärmte Kühlluft wird im Bereich des jeweiligen Endpunktes dem Lüfter zugeführt, welcher die Kühlluft beschleunigt und durch die zumindest eine zweite Öffnung aus dem Gehäuse hinaus presst. Vorzugsweise ist der Lüfter als Radiallüfter ausgeführt, wobei die zumindest eine zweite Öffnung an einer Mantelfläche des Gehäuses angeordnet ist und der Radiallüfter die Kühlluft in radialer Richtung aus dem Gehäuse drückt. Der Lüfter kann jedoch auch als Axiallüfter ausgeführt sein, wobei die zumindest eine zweite Öffnung an einer Stirnseite des Gehäuses angeordnet ist und der Axiallüfter die Kühlluft in axialer Richtung aus dem Gehäuse drückt.

Bei einer weiteren vorteilhaften Ausgestaltung der Erfindung ist der Lüfter dabei strömungstechnisch hinter den zumindest zwei Schleifringen und in axialer Richtung betrachtet neben den zumindest zwei Schleifringen angeordnet.

Der Lüfter befindet sich somit in axialer Richtung versetzt zu den zumindest zwei Schleifringen und gleichzeitig strömungstechnisch stromabwärts der zumindest zwei Schleifringe und insbesondere stromabwärts der Schleifringbürsten und des zumindest einen Bürstenhalters. Durch diese Anordnung des Lüfters wird eine in radialer Richtung sehr kompakte Schleifringanordnung ermöglicht, welche trotz ihrer Kompaktheit dennoch über eine ausreichende Kühlleistung verfügt.

Vorzugsweise ist die elektrische Maschine mit der zuvor erläuterten Schleifringanordnung mit einer elektrischen Leistung von zumindest 1 MW, vorzugsweise zumindest 3 oder 5 MW, betreibbar. Dabei kann die elektrische Maschine als Generator, insbesondere Windkraftgenerator, oder auch als Motor, insbesondere für Mühlenantriebe, ausgebildet sein. Insbesondere ist die vorgeschlagene Schleifringanordnung derart ausgestaltet, dass eine elektrische Leistung von zumindest 10 kW, vorzugsweise mehreren 100 kW, vom bzw. zum drehbar gelagerten Rotationskörper übertragbar ist. Ist die elektrische Maschine als Ringmotor, insbesondere mit einer elektrischen Leistung von mehr als 15 MW, ausgestaltet, sind mittels der vorgeschlagenen Schleifringanordnung vorzugsweise elektrische Leistungen von zumindest 1 MW übertragbar.

Im Folgenden wird die Erfindung anhand der in den Figuren dargestellten Ausführungsbeispiele näher beschrieben und erläutert. Es zeigen:

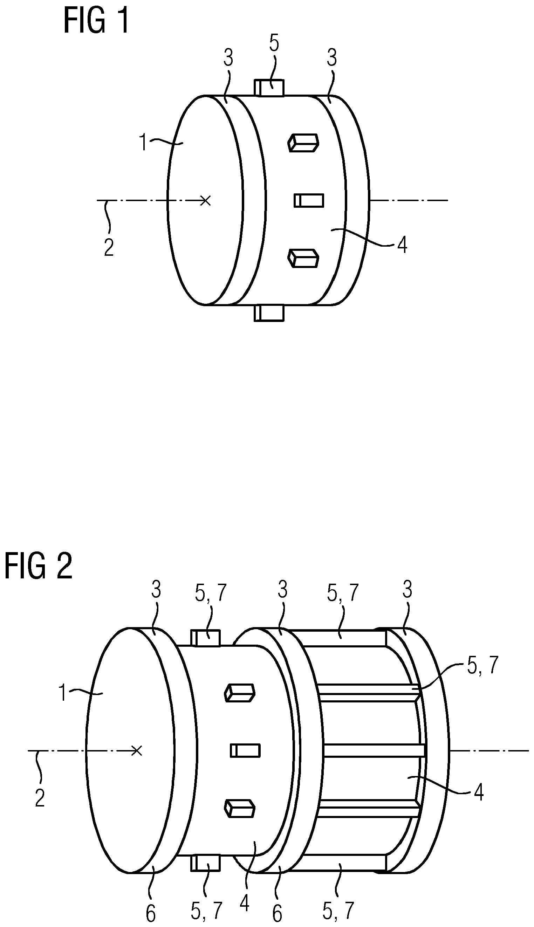

FIG 1 eine erste exemplarische Schleifringanordnung FIG 2-5 ein zweites bis fünftes Ausführungsbeispiel der erfindungsgemäßen Schleifringanordnung. Figur 1 zeigt eine erste exemplarische Schleifringanordnung . Die Schleifringanordnung weist einen Rotationskörper 1 auf, welcher drehbar um eine Rotationsachse 2 lagerbar ist. An einer Mantelfläche 4 des Rotationskörpers 1 sind zwei Schleifringe 3 angeordnet, wobei der Rotationskörper 1 zusätzlich aus der Mantelfläche 4 herausragende Vorsprünge 5 zur Erzeugung eines Kühlluftstroms aufweist. Wie auch bei den weiteren Ausführungsbeispielen, kann im ersten Beispiel ebenfalls vorgesehen sein, dass zwischen dem jeweiligen Schleifring 3 und der jeweiligen axialen Stirnseite des Rotationskörpers 1 weitere Vorsprünge 5 vorgesehen sind.
Figur 2 zeigt ein zweites Ausführungsbeispiel der erfindungsgemäßen Schleifringanordnung. Gleiche Bezugszeichen wie in Figur 1 bezeichnen dabei gleiche Gegenstände.

Im Unterschied zum ersten Beispiel weist die Schleifringanordnung des zweiten Ausführungsbeispiels drei Schleifringe 3 auf. Die Schleifringe 3 weisen dabei jeweils einen aus der Mantelfläche 4 herausragenden Schleifringkörper 6 auf.

Der Rotationskörper 1 verfügt über Vorsprünge 5, welche als Rippen 7 ausgeführt sind. Die Rippen 7 können sich beispielsweise in axialer Richtung vollständig entlang dem Bereich zwischen zwei benachbarten Schleifringen 3 erstrecken, wie rechts des mittleren Schleifrings 3 angedeutet. Die Rippen 7 können auch lediglich einen Teil der axialen Erstreckung zwischen zwei benachbarten Schleifringen 3 abdecken, so dass zwischen der jeweiligen Rippe 7 und dem jeweiligen Schleifring 3 in axialer Richtung eine Lücke verbleibt.

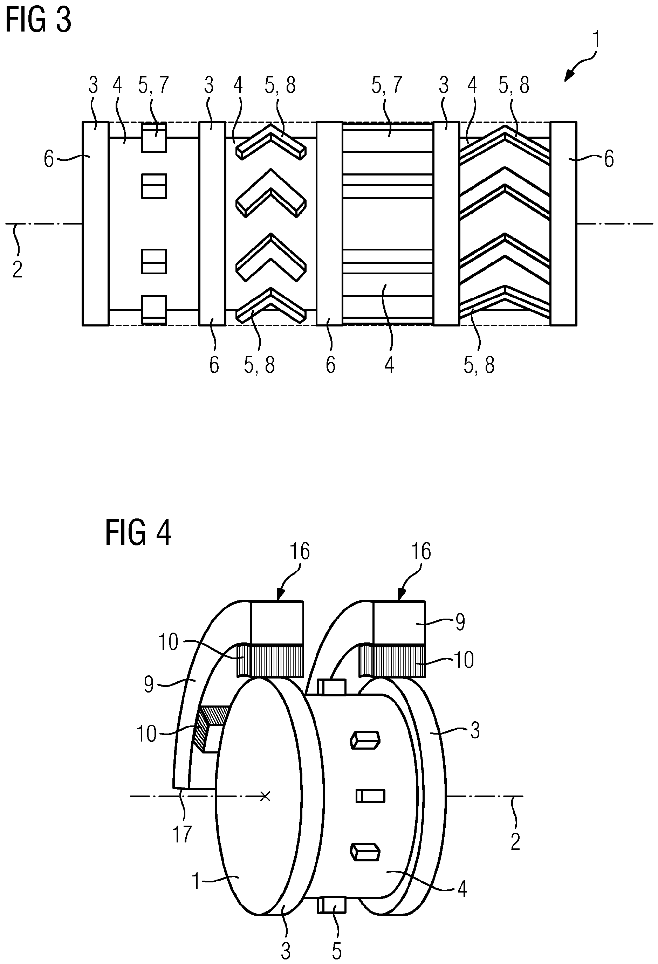

Figur 3 zeigt ein drittes Ausführungsbeispiel der erfindungsgemäßen Schleifringanordnung. Im Unterschied zum ersten oder zweiten Beispiel weist die Schleifringanordnung des dritten Ausführungsbeispiels fünf Schleifringe 3 auf, welche jeweils einen Schleifringkörper 6 aufweisen, der in radialer Richtung betrachtet mindestens so weit aus der Mantelfläche 4 herausragt wie die jeweiligen Vorsprünge 5.
Die Vorsprünge 5 sind dabei teils als Rippen 7 ausgeführt, wie schon im zweiten Ausführungsbeispiel erläutert. Teils sind die Vorsprünge 5 als Fischgräten 8 ausgeführt, welche vorzugsweise derart angeordnet sind, dass bei einer gegebenen Drehrichtung des Rotationskörpers 1 Kühlluft zum jeweiligen Schleifringkörper 6 gefördert wird. Die als Fischgräten 8 ausgeführten Vorsprünge 5 erstrecken sich dabei zum Teil vollständig entlang dem Bereich zwischen zwei benachbarten Schleifringen 3 und zum Teil entlang lediglich eines Abschnitts des Bereichs zwischen zwei benachbarten Schleifringen 3.
Ausgehend von der Mantelfläche 4 weisen die jeweiligen Schleifringkörper 6 dabei eine größere radiale Erstreckung als die jeweiligen Vorsprünge 5 auf.
Figur 4 zeigt ein viertes Ausführungsbeispiel der erfindungsgemäßen Schleifringanordnung. Im Unterschied zum ersten Beispiel weist die Schleifringanordnung gemäß dem vierten Ausführungsbeispiel weiterhin Bürstenhalter 9 und mehrere Schleifringbürsten 10 auf, wobei die jeweilige Schleifringbürste 10 mit dem jeweiligen Bürstenhalter 9 verbunden ist und derart ausgestaltet ist, dass elektrische Energie vom bzw. zum jeweiligen Schleifring 3 übertragbar ist.

Im Rahmen des Ausführungsbeispiels sind zumindest zwei Schleifringbürsten 10 pro Schleifring 3 vorgesehen, wobei die beiden Schleifringbürsten 10 in Umfangsrichtung versetzt zueinander angeordnet sind. Denkbar ist dabei auch, zwei oder mehr Schleifringbürsten 10 vorzusehen, welche in axialer Richtung zueinander versetzt sind und dabei auf dem gleichen Schleifring 3 aufliegen.

Der jeweilige Bürstenhalter 9 erstreckt sich dabei in Umfangsrichtung zwischen einem Anfangspunkt 16 und einem Endpunkt 17, wobei der jeweilige Bürstenhalter 9 dabei vorzugsweise höchstens drei Viertel, insbesondere die Hälfte, des vollen Umfangs um die Rotationsachse 2 abdeckt. Gemäß dem vierten Ausführungsbeispiel deckt der jeweilige Bürstenhalter 9 dabei in etwa ein Viertel des vollen Umfangs um die Rotationsachse 2 auf.

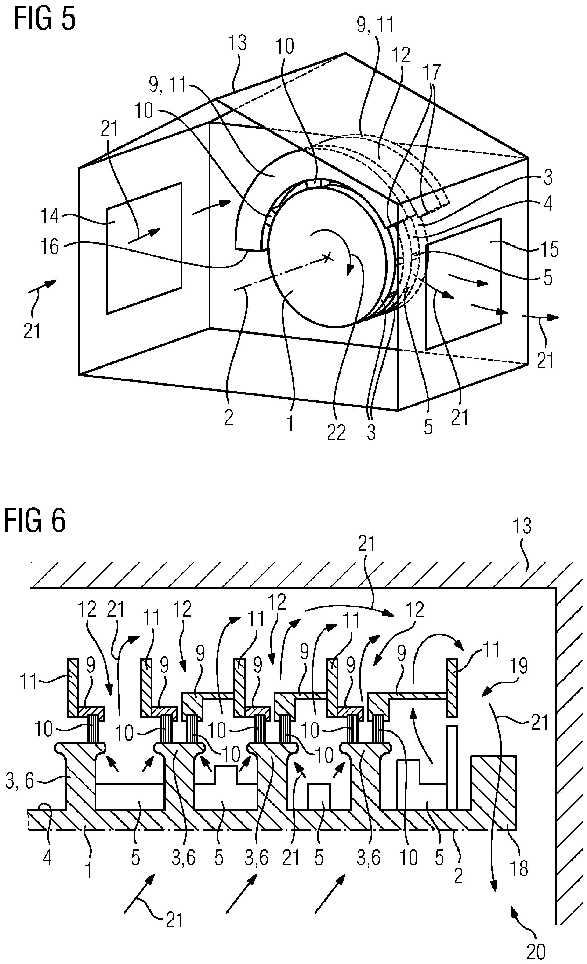

Figur 5 zeigt ein fünftes Ausführungsbeispiel der erfindungsgemäßen Schleifringanordnung, welches einige Ähnlichkeiten zum vierten Ausführungsbeispiel aufweist. Der Rotationskörper 1, die Bürstenhalter 9 und die Schleifringbürsten 10 sind gemäß dem fünften Ausführungsbeispiel in einem Gehäuse 13 angeordnet, welches eine erste Öffnung 14 zum Einlass von Kühlluft und eine zweite Öffnung 15 zum Auslass von Kühlluft aufweist. Wird der Rotationskörper 1 dabei in einer Drehrichtung 22 gedreht, bewirken die Vorsprünge 5, dass sich eine Kühlluftströmung 21 von außerhalb des Gehäuses 13 durch die erste Öffnung 14 in das Gehäuse 13 hinein einstellt. Die Kühlluft strömt dabei zwischen den Bürstenhalter 9 hindurch, wobei die Bürstenhalter 9 gleichzeitig als Leitelemente 11 derart ausgestaltet sind, dass zwischen den beiden Büstenhaltern 9 ein nach radial außen offener Kanal 12 gebildet wird. Die Kühlluft kann somit sowohl in Umfangsrichtung als auch nach radial außen durch die Vorsprünge 5 verwirbelt werden, wobei die Kühlluftströmung 21 das Gehäuse 13 durch die zweite Öffnung 15 wieder verlässt. Zur effizienten Leitung der Kühlluftströmung 21 können passend ausgestaltete Strömungsleitkörper vorgesehen werden.

Der jeweilige Bürstenhalter 9 erstreckt sich dabei in Umfangsrichtung zwischen dem Anfangspunkt 16 und dem Endpunkt 17, wobei der jeweilige Bürstenhalter 9 gemäß dem fünften Ausführungsbeispiel in etwa die Hälfte des vollen Umfangs um die Rotationsachse 2 abdeckt.

Figur 6 zeigt ein sechstes Ausführungsbeispiel der erfindungsgemäßen Schleifringanordnung. Dargestellt ist dabei ein Ausschnitt eines Längsschnittes entlang der Rotationsachse 2.

Der jeweilige Schleifring 3 weist einen Schleifringkörper 6 auf, auf welchem Schleifringbürsten 10 aufliegen, wobei teilweise vorgesehen ist, dass zwei in axialer Richtung zueinander versetzte Schleifringbürsten 2 pro Schleifringkörper 6 vorgesehen sind. Zwischen zwei Schleifringen 3 sind jeweils Vorsprünge 5 vorgesehen, welche sich zum Teil entlang des gesamten axialen Bereichs zwischen zwei Schleifringen 3 erstrecken und zum Teil lediglich einen Abschnitt zwischen zwei Schleifringen 3 abdecken. Die Vorsprünge 5 können dabei unterschiedliche Querschnitte in Längsrichtung aufweisen, wie in Figur 6 angedeutet ist. Dabei weisen die jeweiligen Schleifringkörper 6 ausgehend von der Mantelfläche 4 vorzugsweise eine größere radiale Erstreckung als die jeweiligen Vorsprünge 5 auf.

Die Schleifringbürsten 10 werden durch Bürstenhalter 9 gehalten, welche jeweils mit einem Leitelement 11 verbunden sind. Die Leitelemente 11 sind dabei im axialen Bereich zwischen zwei benachbarten Schleifringen 3 derart angeordnet, dass in Umfangsrichtung zumindest abschnittsweise ein vom jeweiligen Schleifring 3 nach radial außen offener Kanal 12 gebildet wird. Zusätzlich ist jeweils ein Leitelement 11 an den beiden axialen Stirnseiten des Rotationskörpers 1 vorgesehen, wobei an einer der beiden Stirnseiten zusätzlich Vorsprünge 5 angeordnet sind.

Die Kühlluftströmung 21 kann dabei zum Teil ähnlich ausgestaltet sein, wie im fünften Ausführungsbeispiel, wobei im Rahmen des sechsten Ausführungsbeispiels vorgesehen ist, dass die Kühlluft auch in axialer Richtung entlang der Rotationsachse 2 strömt und schließlich an einer Stirnseite des Rotationskörpers 1 eine Einlassseite 19 eines Lüfters 18 erreicht. Der Lüfter 18 fördert die Kühlluft dabei zu einer Auslassseite 20, welche vorzugsweise derart angeordnet ist, dass vom Lüfter 13 ausgelassene Kühlluft durch die passend angeordnete zweite Öffnung 15 aus dem Gehäuse 13 strömen kann. Zur effizienten Leitung der Kühlluftströmung 21 können passend ausgestaltete Strömungsleitkörper vorgesehen werden.

Zusammenfassend betrifft die Erfindung einen Windkraftgenerator mit einer Schleifringanordnung nach Anspruch 1. Um die Kühlung von Schleifringanordnungen zu verbessern, wird vorgeschlagen, dass der zumindest eine Rotationskörper aus der Mantelfläche herausragende Vorsprünge zur Erzeugung eines Kühlluftstroms aufweist.

## Patentansprüche

1. Windkraftgenerator mit einer Schleifringanordnung aufweisend
- zumindest einen Rotationskörper (1), welcher drehbar um eine Rotationsachse (2) lagerbar ist, und
- zumindest zwei Schleifringe (3), welche jeweils an einer Mantelfläche (4) des zumindest einen Rotationskörpers (1) angeordnet sind,
wobei die Schleifringanordnung ein Gehäuse (13) aufweist, welches den zumindest einen Rotationskörper (1), den zumindest einen Bürstenhalter (9) und die Schleifringbürsten (10) zumindest teilweise einhaust, wobei das Gehäuse (13) zumindest eine erste Öffnung (14) zum Eintritt von Kühlluft und zumindest eine zweite Öffnung (15) zum Austritt von Kühlluft aufweist,
**dadurch gekennzeichnet, dass** der zumindest eine Rotationskörper (1) aus der Mantelfläche (4) herausragende Vorsprünge (5) zur Erzeugung eines Kühlluftstroms aufweist,
wobei der jeweilige Schleifring (3) einen aus der Mantelfläche (4) herausragenden Schleifringkörper (6) aufweist,
wobei die radiale Erstreckung des jeweiligen Schleifringkörpers (6) ausgehend von der Manteloberfläche (4) mindestens so groß ist wie jene der Vorsprünge (5)

2. Windkraftgenerator nach Anspruch 1,
wobei die Vorsprünge (5) jeweils in einem jeweiligen Zwischenraum zwischen zwei benachbarten Schleifringen (3) angeordnet sind.

3. Windkraftgenerator nach einem der vorhergehenden Ansprüche,
wobei die Vorsprünge (5) jeweils in axialer Richtung beiderseits eines jeweiligen Schleifringes (3) angeordnet sind.

4. Windkraftgenerator nach einem der vorhergehenden Ansprüche,
wobei der jeweilige Vorsprung (5) im Wesentlichen rippenförmig ausgestaltet ist.

5. Windkraftgenerator nach einem der vorhergehenden Ansprüche,
wobei der jeweilige Vorsprung (5) im Wesentlichen fischgrätenförmig ausgestaltet ist.

6. Windkraftgenerator nach einem der vorhergehenden Ansprüche,
wobei die Schleifringanordnung zumindest einen Bürstenhalter (9) aufweist,
wobei die Schleifringanordnung zumindest eine Schleifringbürste (10) je Schleifring (3) aufweist,
wobei die jeweilige Schleifringbürste (10) mit dem jeweiligen Bürstenhalter (9) verbunden ist und derart ausgestaltet ist, dass elektrische Energie vom bzw. zum jeweiligen Schleifring (3) übertragbar ist.

7. Windkraftgenerator nach Anspruch 6,
wobei die Schleifringanordnung je Schleifring (3) zumindest zwei oder drei Schleifringbürsten (10) zur Übertragung elektrischer Energie vom bzw. zum jeweiligen Schleifring (3) aufweist.

8. Windkraftgenerator nach Anspruch 6 oder 7,
wobei im axialen Bereich zwischen zwei benachbarten Schleifringen (3) jeweils ein Leitelement (11) derart angeordnet ist, dass in Umfangsrichtung zumindest abschnittsweise ein vom jeweiligen Schleifring (3) nach radial außen offener Kanal (12) gebildet wird.

9. Windkraftgenerator nach einem der vorhergehenden Ansprüche,
wobei sich der jeweilige Bürstenhalter (9) in Umfangsrichtung zwischen einem Anfangspunkt (16) und einem Endpunkt (17) entlang höchstens drei Vierteln, insbesondere der Hälfte, des vollen Umfangs um die Rotationsachse (2) erstreckt,
wobei die zumindest eine erste Öffnung (14) derart angeordnet ist, dass Kühlluft im Bereich des jeweiligen Anfangspunktes (16) in das Gehäuse (13) eindringen kann.

10. Windkraftgenerator nach einem der vorhergehenden Ansprüche,
wobei die Schleifringanordnung einen Lüfter (18) aufweist, welcher im Gehäuse (13) angeordnet ist.

11. Windkraftgenerator nach einem der vorhergehenden Ansprüche,
wobei eine Einlassseite (19) des Lüfters (18) im Bereich des jeweiligen Endpunktes (17) angeordnet ist,
wobei eine Auslassseite (20) des Lüfters (13) derart angeordnet ist, dass vom Lüfter (13) ausgelassene Kühlluft durch die zumindest eine zweite Öffnung (15) aus dem Gehäuse (13) strömen kann.

12. Windkraftgenerator nach einem der vorhergehenden Ansprüche,
wobei der Lüfter (13) strömungstechnisch hinter den zumindest zwei Schleifringen (3) und in axialer Richtung betrachtet neben den zumindest zwei Schleifringen (3) angeordnet ist.

## Claims

1. Wind power generator with a slip ring assembly,
having
- at least one rotary body (1) which can be mounted so as to rotate about an axis of rotation (2), and
- at least two slip rings (3), which are each arranged on a lateral surface (4) of the at least one rotary body (1),
wherein the slip ring assembly has a housing (13) which at least partially encases the at least one rotary body (1), the at least one brush holder (9) and the slip ring brushes (10), wherein the housing (13) has at least one first opening (14) for the entry of cooling air and at least one second opening (15) for the exit of cooling air,
**characterised in that**
the at least one rotary body (1) has projections (5) protruding from the lateral surface (4) for generating a cooling air flow,
wherein the respective slip ring (3) has a slip ring body (6) protruding from the lateral surface (4),
wherein the radial extension of the respective slip ring body (6) originating from the lateral surface (4) is at least as large as that of the projections (5).

2. Wind power generator according to claim 1,
wherein the projections (5) are each arranged in a respective intermediate space between two adjacent slip rings (3).

3. Wind power generator according to one of the preceding claims,
wherein the projections (5) are each arranged in the axial direction on both sides of a respective slip ring (3).

4. Wind power generator according to one of the preceding claims,
wherein the respective projection (5) is essentially designed to be rib-shaped.

5. Wind power generator according to one of the preceding claims,
wherein the respective projection (5) is essentially designed to be herringbone-shaped.

6. Wind power generator according to one of the preceding claims,
wherein the slip ring assembly has at least one brush holder (9),
wherein the slip ring assembly has at least one slip ring brush (10) per slip ring (3),
wherein the respective slip ring brush (10) is connected to the respective brush holder (9) and is designed such that electrical energy can be transmitted from or to the respective slip ring (3).

7. Wind power generator according to claim 6,
wherein the slip ring assembly has at least two or three slip ring brushes (10) per slip ring (3) for transmitting electrical energy from or to the respective slip ring (3).

8. Wind power generator according to claim 6 or 7,
wherein in the axial region between two adjacent slip rings (3) a guide element (11) is arranged in each case such that in the circumferential direction a channel (12) is formed at least in sections which is open radially outwardly from the respective slip ring (3).

9. Wind power generator according to one of the preceding claims,
wherein the respective brush holder (9) extends about the axis of rotation (2) in the circumferential direction between a starting point (16) and an end point (17) along at most three-quarters, in particular half, of the full circumference, wherein the at least one first opening (14) is arranged such that cooling air can penetrate into the housing (13) in the region of the respective starting point (16).

10. Wind power generator according to one of the preceding claims,
wherein the slip ring assembly has a fan (18) which is arranged in the housing (13).

11. Wind power generator according to one of the preceding claims,
wherein an inlet side (19) of the fan (18) is arranged in the region of the respective end point (17),
wherein an outlet side (20) of the fan (13) is arranged such that cooling air discharged by the fan (13) can flow out of the housing (13) through the at least one second opening (15).

12. Wind power generator according to one of the preceding claims,
wherein the fan (13) is arranged fluidically behind the at least two slip rings (3) and viewed in the axial direction is arranged next to the at least two slip rings (3).

## Revendications

1. Génératrice d'éolienne ayant un agencement de bagues collectrices comprenant :
- au moins un corps (1) tournant, qui peut être monté tournant autour d un axe (2) de rotation et
- au moins deux bagues (3) collectrices, qui sont montées chacune sur une surface (4) latérale du au moins un corps (1) tournant,
dans laquelle 1 agencement de bagues collectrices a un boîtier (13) dans lequel sont logés, au moins en partie, le au moins un corps (1) tournant, le au moins un porte-balai (9) et les balais (10) de bague collectrice, le boîtier (13) ayant au moins une première ouverture (14) d entrée d air de refroidissement et au moins une deuxième ouverture (15) de sortie d air de refroidissement,
**caractérisée en ce que** le au moins un corps (1) tournant a, pour produire un courant d air de refroidissement, des saillies (5) sortant de la surface (4) latérale,
la bague (3) collectrice a un corps (6) de bague collectrice sortant de la surface (4) latérale,
1 étendue radiale du corps (6) de bague collectrice, à partir de la surface (4) latérale, est au moins aussi grande que celle des saillies (5).

2. Génératrice d éolienne suivant la revendication 1,
dans laquelle les saillies (5) sont disposées respectivement dans un espace intermédiaire respectif entre deux bagues (3) collectrices voisines.

3. Génératrice d éolienne suivant 1 une des revendications précédentes,
dans laquelle les saillies (5) sont disposées respectivement dans la direction axiale des deux côtés d une bague (3) collectrice respective.

4. Génératrice d éolienne suivant 1 une des revendications précédentes,
dans laquelle la saillie (5) respective est sensiblement en forme de nervure.

5. Génératrice d éolienne suivant 1 une des revendications précédentes,
dans laquelle la saillie (5) respective est sensiblement en forme d arête de poisson.

6. Génératrice d éolienne suivant 1 une des revendications précédentes,
dans laquelle 1 agencement de bagues collectrices a au moins un porte-balai (9),
dans laquelle 1 agencement de bagues collectrices a une brosse (10) par bague (3) collectrice,
dans laquelle la brosse (10) respective est reliée au porte-balai (9) respectif et est conformée de manière à pouvoir transporter de 1 énergie électrique de la bague (3) collectrice ou vers celle-ci.

7. Génératrice d éolienne suivant la revendication 6,
dans laquelle 1 agencement de bagues collectrices a, par bague (3) collectrice, au moins deux ou trois balais (10) de transport d énergie électrique de la bague (3) collectrice ou à celle-ci.

8. Génératrice d éolienne suivant la revendication 6 ou 7, dans laquelle il est disposé, dans la partie axiale entre deux bagues (3) collectrices voisines, respectivement un élément (11) conducteur, de manière à former, dans la direction périphérique, au moins par tronçon, un canal (12) ouvert vers 1 extérieur radialement par la bague (3) collectrice respective.

9. Génératrice d éolienne suivant 1 une des revendications précédentes,
dans laquelle le porte-balai (9) respectif s étend dans la direction périphérique, entre un point (16) de début et un point (17) de fin, au plus sur trois quarts, notamment sur la moitié, du pourtour complet autour de 1 axe (2) de rotation,
dans laquelle la au moins une première ouverture (14) est disposée de manière à pouvoir introduire de 1 air de refroidissement dans le boîtier (13) dans la région du point (16) de début.

10. Génératrice d éolienne suivant 1 une des revendications précédentes,
dans laquelle 1 agencement de bagues collectrices a un ventilateur (18), qui est disposé dans le boîtier (13).

11. Génératrice d éolienne suivant 1 une des revendications précédentes,
dans laquelle un côté (19) d entrée du ventilateur (18) est disposé dans la partie du point (17) de fin,
dans laquelle un côté (20) de sortie du ventilateur (13) est disposé de manière à ce que de 1 air de refroidissement, qui est sorti du ventilateur (13), puisse sortir du boîtier (13) en passant par la au moins une deuxième ouverture (15).

12. Génératrice d éolienne suivant 1 une des revendications précédentes,
dans laquelle le ventilateur (13) est disposé en technique d écoulement en aval des au moins deux bagues (3) collectrices et considéré dans la direction axiale à côté des au moins deux bagues (3) collectrices.
